# FASCICULE DE BREVET EUROPEEN

(11) **EP 1 101 568 B1**
(45) Date de publication et mention de la délivrance du brevet: **25.02.2004**
(21) Numéro de dépôt: 00403184.5
(22) Date de dépôt: 16.11.2000
(51) Int. Cl.: B24C 1/10, B24C 5/08, B24C 3/20, C21D 7/06, F01D 5/28, B24B 1/04

(54) **Procédé et machine de grenaillage par ultrasons de pièces sur une roue**
Verfahren und Vorrichtung zum Strahlen von radförmig angeordneten Stücken durch Ultraschall
Method and apparatus for blasting of wheel-like workpieces using ultrasound

(30) Priorité: 18.11.1999 FR 9914482
(43) Date de publication de la demande: 23.05.2001
(73) Titulaire: SNECMA MOTEURS, 75015 Paris (FR)
(72) Inventeur: Duquenne, Catherine Dominique Béatrice, 77850 Hericy (FR); Giffard, Véronique Christiane Raymonde, 91770 Saint Vrain (FR); Gueldry, Gérard Michel Roland, 77240 Vert Saint Denis (FR); Mons, Claude Marcel, 77176 Savigny Le Temple (FR); Chardin, Hervé François, 44690 La Haye-Fouassiere (FR); Cheppe, Patrick, 44115 Basse-Goulaine (FR)

(56) Documents cités:
- FR-A- 2 689 431
- FR-A- 2 714 629
- FR-A- 2 753 406

## Description

L'invention se rapporte à un procédé de grenaillage dit "par ultrasons" mettant en oeuvre un brouillard de microbilles à l'intérieur d'une enceinte, et plus particulièrement à un procédé de grenaillage de pièces sur une roue, telles les pales des aubes de turbomachines sur un rotor. L'invention se rapporte également à une machine de grenaillage indispensable à la mise en oeuvre du présent procédé.

Par le terme "roue", on entend un objet ayant une forme générale de révolution selon un axe géométrique, cet objet étant susceptible d'être mis en rotation autour de cet axe.

Afin d'améliorer la résistance en fatigue de pièces mécaniques, il est connu d'en grenailler la surface par projection de microbilles. Cette technique est très utilisée en aéronautique. En impactant la surface de la pièce avec un angle d'incidence faible par rapport à la perpendiculaire à cette surface et avec une énergie cinétique suffisante, les microbilles provoquent une mise en compression permanente de la surface sur une faible épaisseur. Cette mise en compression s'oppose à l'apparition et à la progression des fissures à la surface de la pièce, ce qui permet d'en améliorer la résistance en fatigue. Typiquement, cet angle d'incidence doit être inférieur à 30° pour que les impacts puissent transmettre une énergie suffisante de la bille à la surface impactée. L'exposition de la pièce au grenaillage passe par un optimum qui donne à cette pièce la meilleure résistance. Un grenaillage insuffisant ne donne pas la résistance prévue, mais il est encore possible d'atteindre l'optimum en effectuant un grenaillage complémentaire. Par contre, un grenaillage excessif provoque une dégradation superficielle de la pièce avec un abaissement de sa résistance. Cette dégradation ne peut être récupérée, et la pièce est à rebuter.

Le grenaillage est effectué habituellement à l'aide de buses alimentées simultanément en gaz comprimé et en microbilles, le gaz comprimé assurant la propulsion des microbilles. Ce procédé de grenaillage présente en soi deux inconvénients :
- les paramètres de grenaillage ne sont pas stables, et la machine de grenaillage doit être fréquemment contrôlée et réglée lorsque l'on recherche un grenaillage proche de l'optimum,
- la mise en oeuvre du procédé doit se faire à l'intérieur d'une cabine suffisamment grande pour permettre la manipulation des pièces et des buses de grenaillage.

Il est connu en aéronautique de grenailler les flancs des aubes des rotors des turbomoteurs pour aéronefs. Lorsque les aubes sont fabriquées séparément, elles comportent chacune une pale mince et un pied permettant de tenir l'aube. Pour grenailler la pale mince, l'aube est tenue par le pied et le grenaillage s'effectue avec deux buses pointées l'une vers l'autre de chaque coté de la pale, une première buse effectuant le grenaillage d'un flanc de la pale, l'autre buse effectuant le grenaillage de l'autre flanc de la pale, les deux buses balayant les flancs des pales et étant déplacées avec une synchronisation aussi bonne que possible pour que la progression du grenaillage soit symétrique. Lorsque cette symétrie n'est pas réalisée, des pics de contrainte apparaissent sous le flanc le plus grenaillée, ces pics de contrainte réduisant l'aptitude de l'aube à résister aux sollicitations et provoquant la déformation de l'aube. Cette symétrie est délicate à obtenir et à conserver du fait de la dispersion et de la dérive des paramètres du grenaillage inhérentes à ce procédé. On comprend qu'un grenaillage des aubes proche de l'optimum est une opération longue et coûteuse, car il doit être fait aube par aube avec une grande précision.

On a tenté aussi de grenailler directement et de la même façon les pales de roues aubagées, lesdits rotors se présentant sous la forme d'un ensemble roue + aubes en un seul tenant, les pales des aubes faisant saillie sur la roue. Le grenaillage doit porter sur les flancs des pales ainsi que sur les surfaces de la roue dites "interpales", c'est à dire situées entre deux pales côte à côte et éventuellement autour desdites pales. Les aubes peuvent être montées sur la roue ou bien les pales peuvent être intégrées à la roue par continuité de la matière les constituant.
Le grenaillage s'effectue aube par aube de la façon suivante :
- grenailler de façon synchronisée les deux flancs de chaque aube à l'aide de deux buses à jet dévié pénétrant dans les espaces interpales, c'est à dire dans les espaces situés entre deux pales côte à côte, lesdites buses comportant chacune un réflecteur pour dévier à 90° le flux de microbilles et l'amener perpendiculairement sur les flancs des pales,
- grenailler ensuite à l'aide d'une buse à jet direct la surface interpale de la roue.

Un inconvénient du procédé est l'inévitable recouvrement du grenaillage des flancs des pales et du grenaillage de la surface interpale dans la zone de transition entre lesdits flancs et ladite surface interpale. On comprend en effet que cette zone de transition est grenaillée deux fois.

Un inconvénient majeur du procédé est qu'il est impossible d'y recourir lorsque l'espace interpale est trop étroit pour que l'on puisse y faire passer les buses, ce qui est fréquemment le cas pour les roues aubagées fabriquées aujourd'hui. A la connaissance des inventeurs, on ne sait pas actuellement grenailler les flancs des pales et les surfaces interpales de telles roues lorsque les aubes ne sont pas démontables.

On connaît, par le brevet international WO 95/17994 désignant notamment les Etats-Unis d'Amérique, une machine de grenaillage à ultrasons mettant en oeuvre un bol de titane dont le fond est mis en vibration par une sonotrode associée à un vibrateur à magnétostriction. Les pièces à grenailler sont suspendues à un couvercle posé sur l'ouverture du bol. Le bol entier est mis en vibration et constitue avec le couvercle une enceinte à l'intérieur de laquelle est ainsi entretenu un brouillard de microbilles. Cette machine de grenaillage ne permet pas de grenailler des pièces minces telles les pales des aubes de turbomachine, car le brouillard de microbilles est hétérogène, notamment parce que la distribution de l'énergie vibratoire est très complexe et comporte des ventres et de noeuds. De plus, il faut un bol de grande taille pour grenailler une roue complète, un tel bol étant très coûteux et nécessitant un générateur de vibrations puissant.

On connaît également par le brevet FR.2.689.431 un procédé de grenaillage des dents d'un pignon, ledit pignon étant mis en rotation devant une sonotrode, lesdites dents passant tour à tour devant la sonotrode, ladite sonotrode étant entourée par un rideau de tiges poussées par des ressorts, lesdites tiges arrivant au contact des dents et du pignon, lesdites tiges constituant une enceinte étanche autour de la sonotrode dont les bords déformables suivent le profil des dents et du pignon. Un tel procédé n'est pas applicable à une roue aubagée, car :
- le grenaillage des flancs des pales serait fortement dissymétrique,
- les tiges ne pourraient suivre automatiquement les flancs des pales qui sont trop serrés et proches de la position radiale.
De plus, un grenaillage optimal est difficile à assurer, car il faudrait arrêter le grenaillage avec précision pour traiter toute la périphérie de la roue sans soumettre à un grenaillage supplémentaire la partie de la roue qui a été exposée en premier au grenaillage.

Un premier problème à résoudre est de grenailler les flancs des pales d'une roue aubagée lorsque lesdits flancs sont trop rapprochés pour faire passer des buses de grenaillage.

Un second problème est de grenailler les flancs des pales et les surfaces interpales de la roue sans grenailler deux fois les zones de transition entre lesdits flancs et lesdites surfaces interpales.

Un troisième problème est d'accélérer le grenaillage des pales et des surfaces interpales d'une roue aubagée.

Un quatrième problème est d'améliorer la symétrie du grenaillage sur les flancs opposés des pales.

L'invention propose un procédé de grenaillage par ultrasons de pièces sur une roue, ladite roue comportant une surface annulaire de révolution centrée sur l'axe géométrique de rotation de la roue, lesdites pièces étant disposées sur ladite surface annulaire, lesdites pièces étant alignées selon un cercle géométrique centré sur ledit axe géométrique de rotation, lesdites pièces générant ainsi une surface géométrique de révolution dite enveloppe lorsque la roue tourne selon son axe géométrique de rotation, ledit grenaillage étant effectué par immersion desdites pièces dans un brouillard de microbilles à l'intérieur d'une enceinte active, ledit brouillard de microbilles étant activé par une surface vibrante à l'intérieur de ladite enceinte active, ladite roue étant mise en rotation selon son axe géométrique de rotation pendant le grenaillage. Un tel procédé est remarquable en ce que :
a. on dispose la roue simultanément dans les ouvertures d'au moins trois enceintes, chaque ouverture étant délimitée par deux bords latéraux de part et d'autre des pièces, lesdits bords latéraux étant en regard de la surface annulaire avec un jeu limité E1, lesdites ouvertures étant également délimitées par deux bords de forme en regard l'un de l'autre, lesdits bords de forme étant également en regard au moins de la surface enveloppe avec un jeu limité E2, lesdites enceintes étant adjacentes deux à deux chacune par un bord de forme, au moins une enceinte étant active, au moins deux enceintes étant passive, c'est à dire ne renfermant pas de surface vibrante, chaque enceinte active étant située entre deux autres enceintes,
b. pendant le grenaillage, on alimente les enceintes actives en microbilles et on récupère les microbilles tombées dans les enceintes passives.

On comprend que les pièces peuvent être amovibles sur la roue ou bien être intégrées à la roue par continuité de la matière les constituant. Quoi qu'il en soit, les pièces passent successivement à l'intérieur de chacune des enceintes sous l'effet de la rotation de la roue, ce qui permet de les grenailler toutes. On comprend également qu'une enceinte active ne débouche jamais par un bord de forme directement sur l'extérieur, mais toujours par l'intermédiaire au moins d'une enceinte passive, une enceinte passive pouvant seule déboucher par un bord de forme sur l'extérieur. On comprend que les bords latéraux et les bords de forme coopèrent pour assurer une étanchéité aux microbilles des enceintes par rapport à la roue et aux pièces, ladite étanchéité étant sans contacts. En effet, les bords latéraux referment les enceintes sur la surface annulaire de la roue, ladite surface annulaire défilant de ce fait le long des bords latéraux avec le jeu E1 et lesdites pièces défilant entre les bords latéraux lorsque la roue tourne selon son axe géométrique de rotation. De même, les bords de forme referment les enceintes sur la surface enveloppe, les pièces passant transversalement devant les bords de forme avec le jeu limité E2. Cette étanchéité doit être suffisante pour que le brouillard de microbilles reste concentré dans un volume réduit afin que l'énergie qui l'anime ne se disperse pas d'une façon excessive.

On comprend que des microbilles s'échappent progressivement d'une enceinte active en passant par les espaces interpièces, c'est à dire entre deux pièces, lorsque lesdits espaces interpièces passent devant un bord de forme. Comme une enceinte active est adjacente par chacun de ses bords de forme à une autre enceinte, ces microbilles arrivent dans les enceintes adjacentes. Deux cas de figure se présentent alors. Si cette enceinte adjacente est passive, les microbilles qui ont pénétré dedans ne reçoivent plus d'énergie d'une surface vibrante et retombent rapidement au fond de ladite enceinte passive par épuisement de l'énergie qui les anime. Si cette enceinte adjacente est active, des microbilles s'échapperont de nouveau par les espaces interpièces et pénétreront dans les deux enceintes adjacentes, et ainsi de suite jusqu'à ce qu'elles arrivent dans une enceinte passive dans laquelle elles épuiseront leur énergie et retomberont au fond. On comprend de ce fait qu'un flux de microbilles se crée pendant le grenaillage depuis les enceintes actives vers les enceintes passives, ce flux passant principalement par les espaces interpièces, les microbilles venant s'accumuler dans les enceintes passives étant récupérées et avantageusement introduites de nouveau dans les enceintes actives afin de les alimenter en microbilles.

Il a été constaté que le brouillard de microbilles pénètre très bien dans les espaces étroits entre les pales jusqu'à la surface interpale de la roue, ce qui permet de grenailler complètement les flancs des pales et résout le premier problème. Les surfaces interpales sont grenaillées en même temps que les flancs des pales. De ce fait, les zones de transition entre les flancs des pales et les surfaces interpales ne sont grenaillées qu'une seule fois, ce qui résout le second problème.

Typiquement, la durée du grenaillage conventionnel en cabine d'un lot de 75 pales atteint 24 heures compte tenu des nombreuses manipulations intermédiaires entre chaque pale. Avec le présent procédé, cette durée est ramenée à 90 minutes grâce à la suppression de ces opérations intermédiaires, ce qui résout le troisième problème.

En pratique, le jeu E1 entre les bords latéraux et la surface annulaire est inférieur au diamètre des microbilles, ce qui empêche complètement les microbilles de passer par ce jeu E1, et évite ainsi de devoir utiliser des moyens supplémentaires pour récupérer les microbilles qui se seraient échappées par ce jeu E1.

Avantageusement, le jeu E2 entre les bords de forme et la surface enveloppe est au plus égal à deux fois le diamètre des microbilles. Ceci permet de réduire la quantité de microbilles passant d'une enceinte à l'autre. On peut aussi donner à ce jeu E2 une valeur inférieure au diamètre des microbilles, ce qui empêche complètement lesdites microbilles de passer par ce jeu E2 d'une enceinte à l'autre, mais ce jeu E2 très réduit reste bien évidemment sans effet sur les microbilles qui passent par les espaces interpièces d'une enceinte à l'autre.

Avantageusement, la largeur circonférentielle L1 des enceintes prise entre les bords de forme est au moins égale à trois fois la distance circonférentielle L2 entre deux pièces consécutives, L1 et L2 étant des longueur d'arc sur le cercle géométrique formé par les pièces. En d'autres termes, une enceinte peut contenir jusqu'à quatre pièces simultanément. Dans le cas des enceintes actives, une telle disposition permet de maintenir dans cette enceinte active une masse de brouillard de microbilles supérieure à la masse susceptible de s'échapper par un espace interpièce lorsqu'il passe devant un bord de forme, ce qui régularise ladite masse. Dans le cas des enceintes passives, une telle disposition agrandit l'enceinte, favorise l'épuisement de l'énergie des microbilles, et permet ainsi de réduire la proportion de microbilles susceptible de s'échapper de l'enceinte. Les effet produits sont cependant améliorés lorsque le rapport L1/L2 est plus grand, par exemple au moins égal à cinq ou dix.

Avantageusement, la roue fait au moins N = 5 rotations pendant le grenaillage. Avec une telle disposition, chaque pièce ne reçoit à chaque tour de roue qu'une fraction égale à 1/N du grenaillage total à effectuer, ce qui permet d'effectuer un grenaillage des pièces régulier et proche de l'optimum. On comprend en effet que les pièces passent normalement N fois dans une enceinte active, mais certaines d'entre elles passeront N+1 ou N-1 fois selon la façon dont sera effectué le dernier tour de roue, cette différence 1/N devenant négligeable lorsque N est grand.

Une telle disposition est particulièrement avantageuse dans le cas de pièces minces telles les pales d'aubes de turbomachine. En effet, lorsqu'une pale pénètre dans l'enceinte vibrante, son flanc tourné dans le sens de la rotation de la roue arrive en regard de la surface vibrante et sera en conséquence grenaillé préférentiellement au flanc opposé, alors que c'est le contraire qui se produit lorsque cette même pale va ressortir un instant après de l'enceinte active. Ainsi, la progression du grenaillage sur les flancs opposés d'une pale est dissymétrique pendant le passage de ladite pale dans l'enceinte vibrante, cette dissymétrie se résorbant lorsque la pale ressort de l'enceinte vibrante, cette dissymétrie étant alors divisée par N et pouvant en conséquence devenir négligeable, ce qui résout le quatrième problème.

Avantageusement, les enceintes actives et les surfaces vibrantes sont symétriques par rapport à un plan géométrique P vertical contenant l'axe géométrique de rotation. Avec une telle disposition, le brouillard de microbilles régnant dans les enceintes actives est symétrique par rapport à ce plan P, de sorte que les flancs arrières et avant des pales suivent dans le brouillard de microbilles des cycles de grenaillage équivalents, ce qui améliore la symétrie globale des grenaillages effectués sur les flancs des pales.

La présente demande de brevet d'invention revendique également la machine de grenaillage nécessaire à la mise en oeuvre du présent procédé, ladite machine comportant une broche susceptible de tenir et d'entraîner en rotation un objet tel une roue selon un axe géométrique de rotation, ladite machine de grenaillage comportant une enceinte active, c'est à dire dont la partie basse arrive autour d'une surface vibrante susceptible d'entretenir un brouillard de microbilles dans ladite enceinte, les autres enceintes étant dites passives. Une telle machine de grenaillage est remarquable en ce qu'elle comporte :
a. au moins trois enceintes comportant chacune une ouverture tournée vers l'axe géométrique de rotation, chaque ouverture étant délimitée par un bord, chaque bord comportant deux parties circulaires opposées ou bords latéraux, lesdits bords latéraux formant un arc de cercle centré sur l'axe géométrique de rotation, chaque bord comportant également deux parties de forme en opposition ou bord de forme, lesdits bords de forme étant identiques et disposés selon un cercle géométrique centré sur l'axe géométrique de rotation, lesdites enceintes étant adjacentes deux à deux chacune par un bord de forme, au moins une enceinte étant active, les autres enceintes étant dites passives, chaque enceinte active étant située entre deux autres enceintes,
b. des moyens pour alimenter en microbilles les enceintes actives ainsi que des moyens pour enlever les microbilles des enceintes passives.

Avantageusement, les moyens pour alimenter en microbilles les enceintes actives et les moyens pour enlever les microbilles les enceintes passives sont constitués par des thalwegs comportant des points hauts et des points bas, lesdits points bas étant dans les enceintes actives et arrivant sur les surfaces vibrantes, lesdits points hauts étant dans les enceintes passives. On comprend que les thalwegs drainent par gravité les microbilles tombées au fond des enceintes passives pour les ramener sur les surfaces vibrantes dans les enceintes actives. Ces thalwegs traversent les parois latérales des enceintes en passant par des tunnels.

Avantageusement, les enceintes sont amovibles. De telles enceintes étant de construction simple, par exemple en panneaux de Plexiglas, cette disposition permet d'adapter très simplement la machine de grenaillage à des roues et à des pièces de formes et de dimensions différentes.

L'invention sera mieux comprise et les avantages qu'elle procure apparaîtront plus clairement au vu d'un exemple détaillé de réalisation et des figures annexées.

La figure 1 illustre par une vue de face une machine de grenaillage selon l'invention utilisée pour le grenaillage d'un rotor aubagé de turbomachine, ledit rotor comportant deux étages. Afin de mieux discerner les parties constitutives respectivement du rotor et de la machine de grenaillage, seule la moitié droite dudit rotor est représentée.

La figure 2 illustre par une vue de profil en coupe cette même machine de grenaillage et le rotor.

La figure 3 illustre par une vue agrandie de face la façon dont les faces latérales des aubes sont exposées au brouillard de microbilles à l'intérieur de l'enceinte active. Par mesure de clarté, les espaces interpales ont été élargis.

La figure 4 illustre par une vue agrandie de profil cette même enceinte active et montre en particulier comment les pales passent dans les échancrures devant les bords de forme.

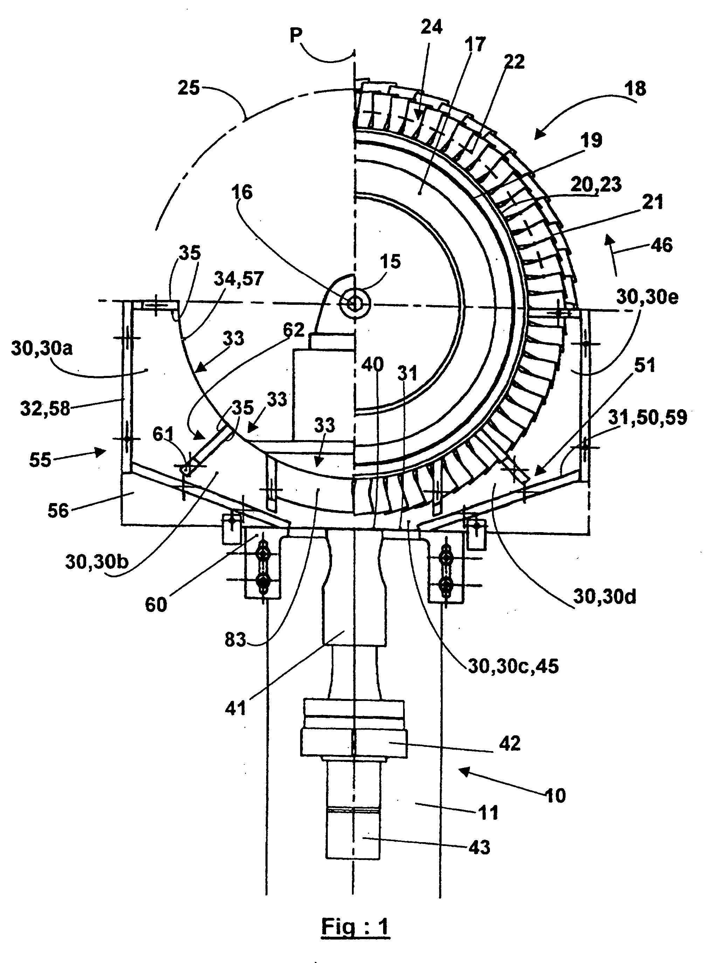

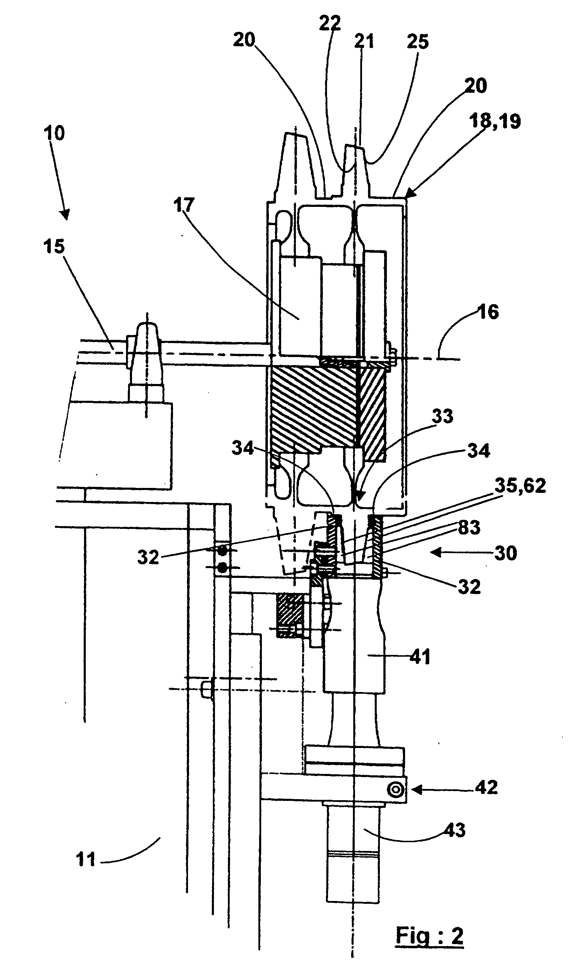

On se reportera simultanément aux figures 1 et 2. La machine de grenaillage 10 par ultrasons comporte un bâti 11 supportant une broche 15 tournante selon un axe géométrique de rotation 16, ladite broche 15 portant à une extrémité un mandrin 17 permettant de saisir un rotor complet 18. La broche 15 est entraînée par un moteur non représenté. Le rotor 18 a une forme générale de révolution et est centré sur l'axe géométrique 16. Le rotor 18 comporte une roue 19 circulaire dont la périphérie est une surface annulaire 20 sur laquelle sont disposées une pluralité de pales 21 alignées selon un cercle géométrique entré sur l'axe géométrique de rotation 16, de sorte que les pales 21 passent successivement par les mêmes positions sous l'effet de la rotation de la roue. Dans cet exemple, le rotor 18 comporte deux étages d'aubes 21. La description qui va suivre s'applique indifféremment à chacun des étages. Dans cet exemple également, les pales 21 sont disposées radialement en saillie sur la surface annulaire 20 et sont régulièrement espacées. On référencera 23 la surface interpale constituée par la portion de la surface annulaire 20 entre les pales 21. On référencera également 24 l'espace interpale, c'est à dire l'espace entre les pales 21. Lorsque la roue 19 tourne, les pales 21 génèrent une surface géométrique enveloppe 25 ayant une forme de révolution autour de l'axe géométrique 16.

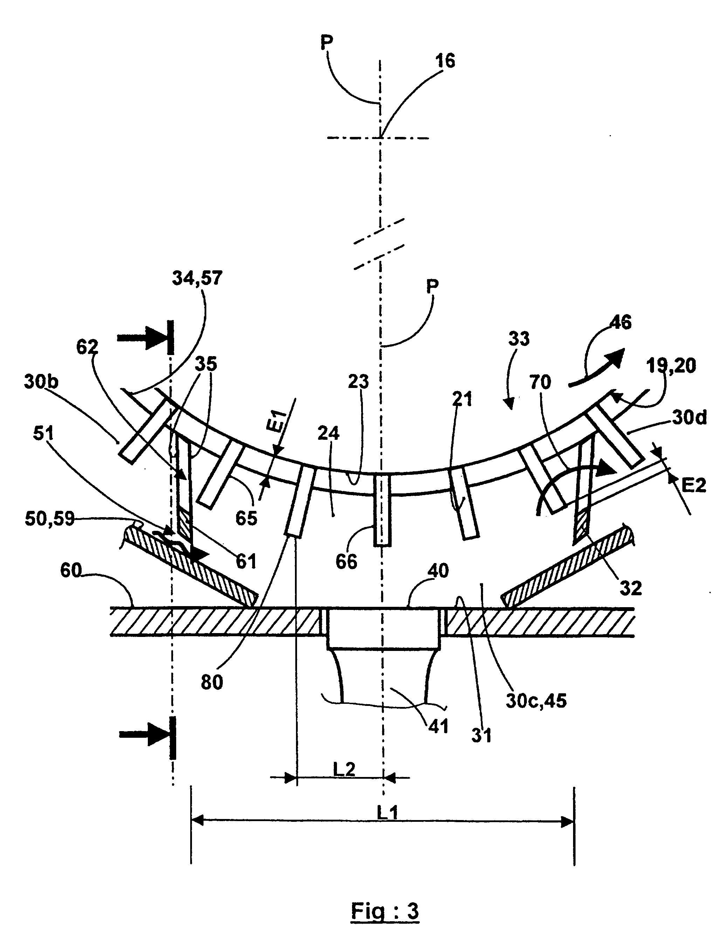

La machine de grenaillage 10 comporte dans cet exemple cinq enceintes 30. Chaque enceinte 30 comporte un fond 31 qui en constitue la partie la plus basse, des parois latérales 32 et une ouvertures 33 tournée vers le haut et éventuellement de coté. Chaque ouverture 33 est délimitée par deux bords latéraux référencés 34 sur la figure 3 qui arrivent avec un jeu limité E1 contre la surface annulaire 20, lesdits bords latéraux 34 étant en conséquence en arcs de cercles centrés sur l'axe géométrique 16. On voit sur la figure 2 que les pales 21 passent entre les bords latéraux 34 lorsque la roue 19 tourne selon l'axe géométrique 16. Chaque ouverture 33 est également délimitée par deux bords de forme 35 reproduisant la forme des pales 21, lesdites pales 21 passant devant lesdits bords de forme 35 avec un jeu limité E2 lorsque la roue 19 tourne.

Les enceintes 30 forment une chaîne et sont référencées successivement 30a, 30b, 30c, 30d et 30e, lesdites enceintes 30 étant adjacentes deux à deux par les bords de forme 35. Ainsi, les enceintes 30a et 30e aux extrémités de la chaîne ont chacune un bord de forme respectivement 35a et 35e débouchant sur l'extérieur, tous les autres bords de forme 35 débouchant sur l'enceinte adjacente. On comprend que lorsque la roue 19 tourne dans le sens de rotation 46, chaque pale venant de l'extérieur pénètre dans la chaîne d'enceintes 30 par le bord de forme 35a, traverse successivement les enceintes 30a,30b,30c,30d,30e en passant entre les bords latéraux 34 et par les bords de forme 35 avant de ressortir à l'extérieur par le bord de forme 35e.

Les dispositions et les fonctions des différentes enceintes 30 ne sont pas identiques. L'enceinte au milieu de la chaîne 30c est active, et son fond 31c horizontal entoure une surface vibrante 40 à l'extrémité d'une sonotrode 41 maintenue au bâti 11 par un support approprié 42 et recevant une énergie vibratoire d'un générateur de vibrations 43 du type à quartz. La sonotrode 41 transmet cette énergie vibratoire à la surface vibrante 40 avec une impédance abaissée, ladite surface vibrante 40 transmettant cette énergie vibratoire à des microbilles présentes sur ladite surface 40 ou venant l'impacter, lesdites microbilles allant rebondir dans toutes les directions contre les parois les parois latérales 32, la surface annulaire 20 et les pales 21 présentes dans l'ouverture 33c de l'enceinte active 30c, lesdites microbilles remplissant ainsi le volume de l'enceinte active 30c sous la forme d'un brouillard de microbilles 45. L'enceinte active 30c est ainsi entourée de chaque coté par deux enceintes passives, soit successivement 30b et 30a d'un coté, et successivement 30d et 30e de l'autre.

On comprend que les bords latéraux 34 et les bords de forme 35 assurent l'étanchéité des enceintes 30 par rapport à la roue 19 et aux pales 21, cette étanchéité étant cependant plus ou moins complète. En donnant au jeu E1 une valeur inférieure au diamètre des microbilles utilisées, on empêche complètement lesdites microbilles de sortir des enceintes en passant entre les bords latéraux 34 et la surface annulaire 30. En réduisant le jeu E2 entre les bords de forme 35 et les pales 21, on réduit le débit de microbilles passant de l'enceinte active 30c vers les deux enceintes passives adjacentes 30b et 30d, mais il subsistera toujours un débit de microbilles passant par les espaces interpales 21 lorsque lesdits espaces interpales 21 arrivent devant un bord de forme 35. Cependant, les microbilles qui sont arrivées dans les enceintes passives 30b et 30d ne reçoivent plus d'énergie par impact d'une surface vibrante, de sorte que ces microbilles épuisent rapidement l'énergie cinétique qui les anime par des impacts successifs contre les parois latérales 32 et le fond 33 des enceintes passives 30b et 30d, ainsi que contre les pales 21 et la surface annulaire 20 présentes dans lesdites enceintes passives 30b,30d, lesdites microbilles retombant alors par gravité au fond 31 desdites enceintes passives 30b,30d. Une faible minorité de microbilles arrive encore à passer dans les enceintes passives 30a,30e à l'extrémité de la chaîne. Leur énergie cinétique est cependant devenue très faible et s'épuise alors complètement par les rebonds successifs précédemment décrits, de sorte que plus aucune microbille ne ressort à l'extérieur. L'opérateur verse en conséquence une quantité appropriée de microbilles dans l'enceinte active 30c avant de démarrer le grenaillage de la roue, cette quantité étant suffisante pour effectuer tout le grenaillage et l'opérateur n'ayant pas en conséquence à en rajouter pendant le grenaillage. Dans cet exemple, la roue 19 avec les pales 21 a un diamètre de 900mm, et les enceintes passives remontent de chaque coté sur une hauteur égale à la moitié du diamètre.

Les microbilles présentes dans les enceintes passives 30a,30b,30d et 30e retombent par épuisement de leur énergie cinétique au fond 31 desdites enceintes. Ces fonds 31 sont inclinés et forment deux thalwegs 50 de chaque coté de l'enceinte active 30c, lesdits thalwegs 50 permettant aux microbilles de redescendre par gravité jusqu'au fond 31c de l'enceinte active 31 et d'arriver sur la surface vibrante 40 où elles recevront une nouvelle énergie et renouvelleront le brouillard de microbilles 45 à l'intérieur de l'enceinte active 30c. Les thalwegs 50 traversent les parois latérales 32 par des tunnels 51, afin de laisser passer les microbilles des enceintes passives 30a,30b,30d,30e vers l'enceinte active 30c à travers les parois latérales 32.

Dans cet exemple, les enceintes 30 sont amovibles et constituées très simplement par une cuve 55 comportant deux parois longitudinales 56 planes, verticales, parallèles entre elles et perpendiculaires à l'axe géométrique de rotation 16, lesdites parois longitudinales 56 comportant chacune un chant 57 en demi-cercle centré sur ledit axe géométrique de rotation 16, lesdits chants arrivant contre la surface annulaire 20 de la roue 19 de part et d'autre des pales 21, lesdites parois longitudinales 56 étant reliées par des parois transversales 58 afin de fermer latéralement la cuve 55. Les parois transversales 58 se rapprochent vers le bas de la cuve 55 pour former un fond 59 incliné vers le milieu. La cuve 55 est posée sur un plateau 60 attaché au bâti 11, ledit plateau entourant la surface vibrante 40 à l'extrémité supérieure à la sonotrode 41. On comprend que la cuve 55 combinée au plateau 60 et à la surface vibrante 40 est ouverte par le dessus et étanche latéralement et vers le bas au moins aux microbilles. La cuve 55 est divisée en cinq enceintes 30 par six cloisons transversales 61 approximativement radiales à l'axe géométrique de rotation 16, lesdites cloisons transversales 61 comportant des échancrures non référencées dans lesquelles passent avec le jeu E2 les pales 21 lorsque la roue 19 tourne. On comprend qu'une telle cuve 55 peut être réalisée très simplement par découpage de ses constituants dans une plaque, par exemple en Plexiglas, lesdits composants étant ensuite assemblés, par exemple par des vis. On comprend que les deux chants 57 constituent les bords latéraux 34 des enceintes 30, et que les bords des échancrures dans les cloisons transversales 61 constituent les bords de forme 35. On comprend également que l'enceinte 30 aménagée dans la cuve 55 au-dessus de la surface vibrante 40 constitue l'enceinte active 30c, alors que les autres enceintes 30 aménagées dans la cuve 55 constituent les enceintes passives 30a,30b,30d,30e.

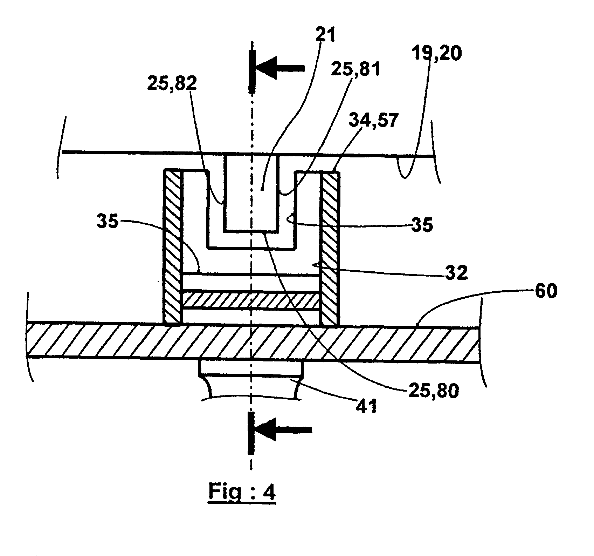

On se reportera maintenant simultanément aux figures 3 et 4. Par mesure de clarté, les jeux E1 et E2 ont été agrandis, et les espaces interpales augmentés. On référencera 65 et 66 les flancs opposés de la pale 20, le flanc 65, dit avant, étant conventionnellement tourné dans le sens de rotation 46, le flanc opposé, dit arrière, étant ainsi tourné en sens inverse. On va décrire l'histoire d'une pale 21 et de ses flancs 65,66 traversant l'enceinte passive 30c, les références de la pale 21 et de ses flancs 65,66 étant indicées successivement a,b,c correspondant respectivement à la position d'entrée, à la position médiane et à la position de sortie. Sous l'effet de la rotation de la roue 19 dans le sens de rotation 46, la pale 21a venant de l'enceinte passive 30b pénètre dans l'enceinte active 30c en passant dans l'échancrure 62 d'une cloison transversale 61 avec un jeu limité E2 par rapport au bord de forme 35 délimitant ladite échancrure 62. Le flanc avant 65a de ladite pale 21a est ainsi tourné vers la surface vibrante 40 à l'extrémité supérieure de la sonotrode 41, ledit flanc avant 65a étant ainsi exposé au brouillard de microbilles et subissant de ce fait le grenaillage. Le flanc arrière 66a au contraire n'est que faiblement exposé au brouillard de microbilles et le sera progressivement lorsque la pale 21a approchera de la position médiane. Dans sa position médiane, la pale référencée alors 21b est complètement immergée dans le brouillard de microbilles, de sorte que ses deux flancs référencés ici 65b,66b sont exposés sensiblement au même grenaillage. Lorsqu'elle va ressortir, la pale référencée alors 21c expose son flanc arrière 65c au brouillard de microbilles alors que son flanc avant 65c n'est que faiblement exposé, de sorte que seul le flanc arrière 65c est grenaillé. On comprend que la symétrie de l'enceinte active 30c et de la surface vibrante 40, par rapport à un plan géométrique P vertical et contenant l'axe géométrique de rotation 16, a pour effet de rendre symétrique par rapport à ce même plan P le brouillard de microbilles à l'intérieur de l'enceinte active 30c. De ce fait, les flancs opposés 65,66 de la pale 21 suivront dans un tel brouillard de microbilles, dans l'enceinte active 30c, des trajets symétriques produisant à chaque passage un grenaillage équivalent, la différence de grenaillage qui apparaît entre les flancs opposés 65,66 pendant la traversée de l'enceinte active 30c est temporaire, car elle se résorbe au moment où la pale 21 va quitter ladite enceinte active 30c. On comprend également qu'un grenaillage effectué en N tours au lieu d'un seul a pour effet de diviser cette différence temporaire par N. Par exemple, si le grenaillage est effectué en N=20 tours, cette différence temporaire n'est plus égale qu'à 5% du grenaillage total. L'inventeur considère N=5 tours comme un minimum acceptable pour grenailler les pales 21 très minces utilisées sur les turbomoteurs. Il est possible de donner à N des valeurs bien plus grandes, à condition que la vitesse tangentielle des pales 21 qui en résulte reste négligeable comparée à la vitesse moyenne des microbilles constituant le brouillard. Dans le cas contraire, il se créerait une dissymétrie, le flanc avant 65 recevant alors grenaillé avec une intensité supérieure au grenaillage reçu par le flanc arrière 66. Dans cet exemple, la largeur L1 de l'enceinte est égale à quatre fois la distance L2 entre deux pièces consécutives, cette enceinte pouvant en conséquence contenir jusqu'à cinq pièces simultannément.

Une fraction 70 des microbilles présentes dans l'enceinte passe par les espaces interpales 24 dans les enceintes passives adjacentes 30b et 30d. Ces microbilles perdent rapidement leur énergie et retombent au fond 31 pour constituer un flux 71 descendant par gravité le thalweg 50 et revenant ainsi dans l'enceinte active 30c en traversant les cloisons transversales 61 par des espaces ou tunnels 51 laissés entre lesdites cloisons transversales 61 et lesdits fonds 31.

Les sommets 80 des pales 21 subissent sous l'effet du grenaillage un matage qui les élargit un peu en forme de tête de marteau. De ce fait, on donnera aux pales une hauteur supérieure à la hauteur définitive, et on usinera lesdits sommets 80 après le grenaillage, par exemple par rectification, afin de ramener lesdites pales 21 à leur hauteur définitive et enlever les têtes de marteau.

Avantageusement, on disposera dans l'enceinte active 30c des formes référencées 83 sur la figure 1, lesdites formes 83 étant situées de part et d'autre des pales 21, lesdites pales 21 traversant l'enceinte active 30c entre lesdites formes 83 avec ce même jeu E2. Une telle disposition a pour effet d'empêcher les microbilles d'impacter les bords d'attaque 81 et les bords de fuite 82 naturellement très minces desdites pales 21, et pour résultat de protéger du matage lesdits bords d'attaque 81 et lesdits bords de fuite 82.

## Revendications

1. Procédé de grenaillage par ultrasons de pièces sur une roue, ladite roue (19) comportant une surface annulaire (20) de révolution centrée sur l'axe géométrique de rotation (16) de ladite roue (19), lesdites pièces (21) étant disposées sur ladite surface annulaire (20), lesdites pièces (21) étant alignées selon un cercle géométrique centré sur ledit axe géométrique de rotation (16), lesdites pièces générant ainsi une surface géométrique de révolution (25) dite enveloppe lorsque la roue (19) tourne selon son axe géométrique de rotation (16), ledit grenaillage étant effectué par immersion desdites pièces (21) dans un brouillard de microbilles à l'intérieur d'une enceinte active (30c), ledit brouillard de microbilles étant activé par une surface vibrante (40) à l'intérieur de ladite enceinte active (30c), ladite roue (19) étant mise en rotation selon son axe géométrique de rotation (16) pendant le grenaillage, **caractérisé en ce que** :
a. on dispose la roue (19) simultanément dans les ouvertures (33) d'au moins trois enceintes (30), chaque ouverture (33) étant délimitée par deux bords latéraux (34) de part et d'autre des pièces (21), lesdits bords latéraux (34) étant en regard de la surface annulaire (20) avec un jeu limité E1, lesdites ouvertures (33) étant également délimitées par deux bords de forme (35) en regard l'un de l'autre, lesdits bords de forme (35) étant également en regard au moins de la surface enveloppe (25) avec un jeu limité E2, lesdites enceintes (30) étant adjacentes deux à deux chacune par un bord de forme (35), au moins une enceinte (30c) étant active, au moins deux enceintes (30a,30b,30d,30e) étant passives, chaque enceinte active (30c) étant située entre deux autres enceintes (30),
b. pendant le grenaillage, on alimente les enceintes actives (30c) en microbilles, et on récupère les microbilles tombées dans les enceintes passives (30a,30b,30d,30e).

2. Procédé selon la revendication 1, **caractérisé en ce que** le jeu E1 entre les bords latéraux (34) et la surface annulaire (20) est inférieur au diamètre des microbilles utilisées.

3. Procédé selon la revendication 1 ou 2 **caractérisé en ce que** le jeu E2 est au plus égal à deux fois le diamètre des microbilles utilisées.

4. Procédé selon l'une quelconque des revendications 1 à 3, les espaces entre deux pièces (21) consécutives étant appelés espaces interpièces (24), **caractérisé en ce que** la longueur circonférentielle L1 des enceintes (30) prise entre les bords de forme (35) est au moins égale à trois fois la distance circonférentielle L2 entre deux pièces consécutives.

5. Procédé selon l'une quelconque des revendications 1 à 4, **caractérisé en ce que** la roue fait au moins N = 5 rotations pendant le grenaillage.

6. Procédé selon l'une quelconque des revendications 1 à 5 **caractérisé en ce que** les enceintes actives (30c) et les surfaces vibrantes (40) sont symétriques par rapport à un plan géométrique P vertical contenant l'axe géométrique de rotation (16).

7. Procédé selon l'une quelconque des revendications 1 à 6, **caractérisé en ce que** l'on utilise une succession d'enceintes (30) constituée successivement de deux enceintes passives (30a,30b), d'une enceinte active (30c) et de deux autres enceintes passives (30d,30e).

8. Machine de grenaillage pour mettre en oeuvre le présent procédé, ladite machine de grenaillage (10) comportant une broche (15) susceptible de tenir et d'entraîner en rotation une roue (19) selon un axe géométrique de rotation (16), ladite machine de grenaillage (10) comportant une enceinte (30c) active, le fond (31) de ladite enceinte active (30c) arrivant autour d'une surface vibrante (40) susceptible d'entretenir un brouillard de microbilles dans ladite l'enceinte active (30c), ladite machine de grenaillage étant **caractérisée en ce qu'**elle comporte :
a. au moins trois enceintes (30) comportant chacune une ouverture (33) tournée vers l'axe géométrique de rotation (16), chaque ouverture (33) étant délimitée par deux bords latéraux (34) face à face, l'un des bords latéraux (34) de chaque ouverture (33) étant positionné sur un premier arc de cercle géométrique centré sur l'axe géométrique de rotation (16) alors que l'autre bord latéral (34) de chaque ouverture (33) est positionné sur un second arc de cercle géométrique également centré sur l'axe géométrique de rotation (16), chaque ouverture comportant également deux bords de forme (35) identiques et disposés selon un cercle géométrique centré sur l'axe géométrique de rotation (16), lesdites enceintes (30) étant adjacentes deux à deux chacune par un bord de forme (35), au moins une enceinte (30c) étant active, chaque enceinte active (30c) étant située entre deux autres enceintes (30),
b. des moyens (50,51) pour alimenter en microbilles les enceintes actives (30c) ainsi que des moyens (50,51) pour enlever les microbilles des enceintes passives (30a,30b,30d,30e).

9. Machine de grenaillage selon la revendication 8, les enceintes (30) comportant des parois latérales (32), **caractérisée en ce que** les moyens (50,51) pour alimenter en microbilles les enceintes actives (30c) et les moyens (50,51) pour enlever les microbilles les enceintes passives (30a,30b,30d,30e) sont constitués par des thalwegs (50) au fond (31) desdites enceintes (30), lesdits thalwegs (50) drainant par gravité les microbilles depuis les enceintes passives (30a,30b,30d,30e) et aboutissant dans les enceintes actives (30c) en traversant les parois latérales (32) par des tunnels (51).

10. Machine de grenaillage selon la revendication 8 ou 9, **caractérisée en ce que** les enceintes (30) sont amovibles.

11. Machine de grenaillage selon l'une quelconque des revendications 8 à 10 **caractérisée en ce qu'**elle comporte une cuve (55) ouverte par le dessus comportant deux chants en arc de cercle (57) centrés sur l'axe géométrique de rotation (16), ladite cuve (55) comportant deux parois longitudinales (56) planes et parallèles entre elles, chaque paroi longitudinale (56) supportant l'un des chants en arc de cercle (57), lesdites parois longitudinales (57) étant reliées par des parois transversales (58) fermant latéralement la cuve (55), ladite cuve (55) étant divisée en M enceintes (30) par M+1 cloisons transversales (61), lesdites enceintes (30) étant ouvertes chacune entre les deux chants en arc de cercle (57).

## Patentansprüche

1. Verfahren zum Ultraschall-Strahlen von Teilen auf einem Rad, wobei dieses Rad (19) eine umlaufende, ringförmige Fläche (20) aufweist, die auf der geometrischen Drehachse (16) des Rades (19) zentriert ist, wobei die genannten Teile (21) auf dieser ringförmigen Fläche (20) angeordnet sind, wobei diese Teile (21) auf einem geometrischen Kreis ausgerichtet sind, der auf dieser geometrischen Drehachse (16) zentriert ist, wobei diese Teile auf diese Weise eine umlaufende geometrische Fläche (25), eine sogenannte Mantelfläche erzeugen, wenn sich das Rad (19) um seine geometrische Drehachse (16) dreht, wobei das Strahlen durch Eintauchen dieser Teile (21) in einen Kügelchen-Nebel im Inneren eines aktiven abgeschlossenen Raums (30c) erfolgt, wobei dieser Kügelchen-Nebel von einer im Inneren dieses aktiven abgeschlossenen Raums (30c) schwingenden Fläche (40) aktiviert wird, wobei das Rad (19) während des Strahlens in Drehbewegung um seine geometrische Drehachse (16) versetzt wird,
**dadurch gekennzeichnet,**
**dass :**
a) das Rad (19) gleichzeitig in den Öffnungen (33) von mindestens drei abgeschlossenen Räumen (30) angeordnet wird, wobei jede Öffnung (33) von zwei Seitenrändern (34) beiderseits der Teile (21) umgrenzt ist, wobei diese Seitenränder (34) sich mit einem begrenzten Spiel E1 gegenüber der ringförmigen Fläche (20) befinden, wobei diese Öffnungen (33) auch von zwei einander gegenüber liegenden Formrändem (35) begrenzt werden, wobei diese Formränder (35) sich mit einem begrenzten Spiel E2 auch mindestens gegenüber der Mantelfläche (25) befinden, wobei diese Räume (30) paarweise jeweils mit einem Formrand (35) aneinander liegen, wobei mindestens ein Raum (30c) aktiv ist, wobei mindestens zwei Räume (30a, 30b, 30d, 30e) passiv sind, wobei jeder aktive Raum (30c) sich zwischen zwei anderen Räumen (30) befindet,
b) während des Strahlens die aktiven Räume (30c) mit Kügelchen gespeist werden und die herabgefallenen Kügelchen in den passiven Räumen (30a, 30b, 30d, 30e) aufgefangen werden.

2. Verfahren nach Anspruch 1,
**dadurch gekennzeichnet,**
**dass** das Spiel E1 zwischen den Seitenrändern (34) und der ringförmigen Fläche (20) kleiner als der Durchmesser der verwendeten Kügelchen ist.

3. Verfahren nach Anspruch 1 oder 2,
**dadurch gekennzeichnet,**
**dass** das Spiel E2 höchstens gleich dem Zweifachen des Durchmessers der verwendeten Kügelchen ist.

4. Verfahren nach einem der Ansprüche 1 bis 3, wobei die Zwischenräume zwischen zwei aufeinander folgenden Teilen (21) Schaufelblätter-Zwischenräume(24)genannt werden,
**dadurch gekennzeichnet,**
**dass** die zwischen den Formrändern (35) gemessene Umfangslänge L1 der Räume (30) mindestens gleich dem Dreifachen des Umfangsabstandes L2 zwischen zwei aufeinanderfolgenden Teilen ist.

5. Verfahren nach einem der Ansprüche 1 bis 4,
**dadurch gekennzeichnet,**
**dass** das Rad (19) während des Strahlens mindestens N = 5 Umdrehungen ausführt.

6. Verfahren nach einem der Ansprüche 1 bis 5,
**dadurch gekennzeichnet,**
**dass** die aktiven Räume (30c) und die schwingenden Flächen (40) bezogen auf eine vertikale geometrische Ebene P, in der die geometrische Drehachse (16) liegt, symmetrisch sind.

7. Verfahren nach einem der Ansprüche 1 bis 6,
**dadurch gekennzeichnet,**
**dass** eine Abfolge von Räumen (30) verwendet wird, die nacheinander von zwei passiven Räumen (30a, 30b), einem aktiven Raum (30c) und zwei weiteren passiven Räumen (30d, 30e) gebildet wird.

8. Strahl-Maschine zur Durchführung dieses Verfahrens, wobei diese Strahl-Maschine (10) eine Spindel (15) aufweist, die geeignet ist, ein Rad (19) in Drehbewegung um eine geometrische Drehachse (16) zu bringen und zu halten, wobei diese Strahl-Maschine (10) einen aktiven Raum (30c) aufweist, wobei der Boden (31) des aktiven Raums (30c) um eine schwingende Fläche (40) herum reicht, die geeignet ist, einen Kügelchennebel in diesem aktiven Raum (30c) zu unterhalten,
**dadurch gekennzeichnet,**
**dass** sie aufweist:
a) mindestens drei Räume (30), die jeweils eine der geometrischen Drehachse (16) zugewandte Öffnung (33) enthalten, wobei jede Öffnung (33) durch zwei einander gegenüber liegende Seitenränder (34) umgrenzt ist, wobei der eine der Seitenränder (34) jeder Öffnung (33) auf einem ersten geometrischen Kreisbogen positioniert ist, der auf der geometrischen Drehachse (16) zentriert ist, während der andere Seitenrand (34) jeder Öffnung (33) auf einem zweiten geometrischen Kreisbogen positioniert ist, der ebenfalls auf der geometrischen Drehachse (16) zentriert ist, wobei jede Öffnung ferner zwei identische Formränder (35) aufweist, die auf einem geometrischen Kreis angeordnet sind, der auf der geometrischen Drehachse (16) zentriert ist, wobei diese Räume (30) paarweise jeweils mit einem Formrand (35) aneinandergrenzen, wobei mindestens ein Raum (30c) aktiv ist, wobei sich jeder aktive Raum (30c) zwischen zwei anderen Räumen (30) befindet,
b) Mittel (50, 51), um die aktiven Räume (30c) mit Kügelchen zu versorgen, sowie Mittel (50, 51), um die Kügelchen aus den passiven Räumen (30a, 30b, 30d, 30e) zu entfernen.

9. Strahl-Maschine nach Anspruch 8, bei der die Räume (30) Seitenwände (32) aufweisen,
**dadurch gekennzeichnet,**
**dass** die Mittel (50, 51), um die aktiven Räume (30c) mit Kügelchen zu versorgen, und die Mittel (50, 51), um die Kügelchen aus den passiven Räumen (30a, 30b, 30d, 30e) zu entfernen, aus Talwegen (50) am Boden (31) dieser Räume (30) bestehen, wobei diese Talwege (50) die Kügelchen durch Schwerkraft aus den passiven Räumen (30a, 30b, 30d, 30e) abführen und in den aktiven Räumen (30c) enden, indem sie in Tunnels (51) durch die Seitenwände (32) verlaufen.

10. Strahl-Maschine nach Anspruch 8 oder 9,
**dadurch gekennzeichnet,**
**dass** die Räume (30) abbaubar sind.

11. Strahl-Maschine nach einem der Ansprüche 8 bis 10,
**dadurch gekennzeichnet,**
**dass** sie einen Behälter (55) aufweist, der nach oben offen ist und zwei kreisbogenförmige Kanten (57) aufweist, die auf der geometrischen Drehachse (16) zentriert sind, wobei dieser Behälter (55) zwei flachen, parallel zueinander verlaufende Längswände (56) aufweist, wobei jede Längswand (56) eine der kreisbogenförmigen Kanten (57) trägt, wobei diese Längswände (56) durch Querwände (58) miteinander verbunden sind, die den Behälter (55) seitlich umschließen, wobei dieser Behälter (55) in M Räume (30) unterteilt ist und zwar durch M + 1 Quertrennwände (61), wobei diese Räume (30) jeweils zwischen den beiden kreisbogenförmigen Kanten (57) offen sind.

## Claims

1. Method for the ultrasonic peening of parts on a wheel, said wheel (19) comprising an annular surface (20) of revolution centred on the geometric axis of rotation (16) of said wheel (19), said parts (21) being arranged on said annular surface (20), said parts (21) being aligned in a geometric circle centred on said geometric axis of rotation (16), said parts thus generating a geometric surface of revolution (25) known as the envelope surface when the wheel (19) rotates about its geometric axis of rotation (16), said peening being performed by immersing said parts (21) in a mist of microbeads inside an active chamber (30c), said mist of microbeads being activated by a vibrating surface (40) inside said active chamber (30c), said wheel (19) being rotated about its geometric axis of rotation (16) during peening, **characterized in that**:
a. the wheel (19) is arranged simultaneously in the openings (33) of at least three chambers (30), each opening (33), being delimited by lateral edges (34) on each side of the parts (21), said lateral edges (34) facing the annular surface (20) with limited clearance E1, said openings (33) also being delimited by two shaped edges (35) facing one another, said shaped edges (35) also facing at least the envelope surface (25) with limited clearance E2, said chambers (30) each being adjacent to the next via a shaped edge (35), at least one chamber (30c) being active, at least two chambers (30a, 30b, 30d, 30e) being passive, each active chamber (30c) being located between two other chambers (30),
b. during peening, the active chambers (30c) are supplied with microbeads and the fallen microbeads are recovered from the passive chambers (30a, 30b, 30d, 30e).

2. Method according to Claim 1, **characterized in that** the clearance E1 between the lateral edges (34) and the annular surface (20) is less than the diameter of the microbeads used.

3. Method according to Claim 1 or 2, **characterized in that** the clearance E2 is at most equal to twice the diameter of the microbeads used.

4. Method according to any one of Claims 1 to 3, the spaces between two consecutive parts (21) being known as the inter-parts spaces (24), **characterized in that** the circumferential length L1 of the chambers (30) measured between the shaped edges (35) is at least equal to three times the circumferential distance L2 between two consecutive parts.

5. Method according to any one of Claims 1 to 4, **characterized in that** the wheel performs at least N = 5 rotations during peening.

6. Method according to any one of Claims 1 to 5, **characterized in that** the active chambers (30c) and the vibrating surfaces (40) are symmetric with respect to a vertical geometric plane P containing the geometric axis of rotation (16).

7. Method according to any one of Claims 1 to 6, **characterized in that** use is made of a succession of chambers (30) which consists, in succession, of two passive chambers (30a, 30b), of an active chamber (30c), and of two more passive chambers (30d, 30e).

8. Peening machine for implementing the present method, said peening machine (10) comprising a spindle (15) capable of holding and rotating a wheel (19) about a geometric axis of rotation (16), said peening machine (10) comprising an active chamber (30c), the bottom (31) of said active chamber (30c) arriving around vibrating surface (40) capable of sustaining a mist of microbeads in said active chamber (30c), said peening machine being noteworthy in that it comprises:
a. at least chambers (30) each comprising an opening (33) facing toward the geometric axis of rotation (16), each opening (33) being delimited by two lateral edges (34) facing each other, one of the lateral edges (34) of each opening (33) being positioned on a first arch of a geometric circle centred on the geometric axis of rotation (16), while the other lateral edge (34) of each opening (33) is positioned on a second arc of a geometric circle, also centred on the geometric axis of rotation (16), each opening also comprising two shaped edges (35) which are identical and arranged on a geometric circle centred on the geometric axis of rotation (16), said chambers (30) each being adjacent to the next via a shaped edge (35), at least one chamber (30c) being active, each active chamber (30c) being located between two other chambers (30),
b. means (50, 51) for supplying the active chambers (30c) with microbeads and means (50, 51) for removing the microbeads from the passive chambers (30a, 30b, 30d, 30e).

9. Peening machine according to Claim 8, the chambers (30) comprising lateral walls (32), **characterized in that** the means (50, 51) for supplying the active chambers (30c) with microbeads and the means (50, 51) for removing the microbeads from the passive chambers (30a, 30b, 30d, 30e) consist of thalwegs (50) at the bottom (31) of said chambers (30), said thalwegs (50) draining the microbeads on to gravity from the passive chambers (30a, 30b, 30d, 30e) and terminating in the active chambers (30c), passing through the lateral walls (32) via tunnels (51).

10. Peening machine according to Claim 8 or 9, **characterized in that** the chambers (30) are removable.

11. Peening machine according to any one of Claims 8 to 10, **characterized in that** it comprises a tank (55) which is open at the top and has two circular arc-shaped edge faces (57) centred on the geometric axis of rotation (16), said tank (55) comprising two flat and mutually parallel longitudinal walls (56), each longitudinal wall (56) supporting one of the circular arc-shaped edge faces (57), said longitudinal walls (56) being connected by transverse walls (58) closing the tank (55) laterally, said tank (55) being divided into M chambers (30) by M+1 transverse partitions (61), said chambers (30) each being open between the two circular arc-shaped edge faces (57).
